(19) **Europäisches Patentamt**
**European Patent Office**
**Office européen des brevets**

(11) **EP 4 571 725 A1**

(12) **EUROPEAN PATENT APPLICATION**
published in accordance with Art. 153(4) EPC

(43) Date of publication:
**18.06.2025 Bulletin 2025/25**

(21) Application number: **23858909.7**

(22) Date of filing: **30.06.2023**

(51) International Patent Classification (IPC):
***G09G 3/20*** (2006.01)

(52) Cooperative Patent Classification (CPC):
**G09G 3/20; G09G 5/10; H04M 1/72454; H04N 9/73**

(86) International application number:
**PCT/CN2023/104505**

(87) International publication number:
**WO 2024/045871 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2022 CN 202211064296**

(71) Applicant: **Huawei Technologies Co., Ltd.**
**Shenzhen, Guangdong 518129 (CN)**

(72) Inventors:
- **ZHU, Jiang**
**Shenzhen, Guangdong 518129 (CN)**
- **ZHOU, Xunping**
**Shenzhen, Guangdong 518129 (CN)**

(74) Representative: **Isarpatent**
**- Patent- und Rechtsanwälte Partg mbB**
**Friedrichstraße 31**
**80801 München (DE)**

(54) **DISPLAY METHOD AND APPARATUS**

(57)    A display method and apparatus are provided, and relate to the field of electronic technologies, to reduce vision damage caused by long-time use of an electronic display by a user. The display method is applied to an electronic device. The electronic device includes a display. The display method includes: first obtaining environment information; then determining display information of ambient light based on the environment information; and then adjusting display luminance and a display color temperature of the display based on the display information of the ambient light. The environment information includes luminance of the ambient light and a color temperature of the ambient light; and the display information includes a luminance range corresponding to the luminance of the ambient light and a color temperature range corresponding to the color temperature of the ambient light.

```
                                                              ┌─ S301
┌──────────────────────────────────────────────────────┐
│   Obtain environment information of ambient light       │
└──────────────────────────────────────────────────────┘
                          │
                          ▼                                   ┌─ S302
┌──────────────────────────────────────────────────────┐
│ Determine display information of the ambient light based │
│ on the environment information of the ambient light      │
└──────────────────────────────────────────────────────┘
                          │
                          ▼                                   ┌─ S303
┌──────────────────────────────────────────────────────┐
│ Adjust display luminance and a display color temperature │
│ of a display based on the display information of the     │
│ ambient light                                           │
└──────────────────────────────────────────────────────┘
```

FIG. 3

## Description

This application claims priority to Chinese Patent Application No. 202211064296.4, filed with the China National Intellectual Property Administration on September 1, 2022 and entitled "DISPLAY METHOD AND APPARATUS", which is incorporated herein by reference in its entirety.

## TECHNICAL FIELD

Embodiments of this application relate to the field of electronic technologies, and in particular, to a display method and apparatus.

## BACKGROUND

As information transmission medium, electronic displays appear in every aspect of people's life. With improvement of people's living standards, people spend more time on using the electronic displays on average.

However, long-time use of an electronic display by a user causes damage to eyes of the user.

Therefore, how to reduce vision damage caused by the long-time use of the electronic display by the user is one of problems to be urgently resolved by a person skilled in the art.

## SUMMARY

Embodiments of this application provide a display method and apparatus, to reduce vision damage caused by long-time use of an electronic display by a user. To achieve the foregoing objectives, the following technical solutions are used in embodiments of this application.

According to a first aspect, an embodiment of this application provides a display method, applied to an electronic device. The electronic device includes a display. The method includes: first obtaining environment information; then determining display information of ambient light based on the environment information; and then adjusting display luminance and a display color temperature of the display based on the display information of the ambient light. The environment information includes luminance of the ambient light and a color temperature of the ambient light; and the display information includes a luminance range corresponding to the luminance of the ambient light and a color temperature range corresponding to the color temperature of the ambient light.

It can be learned that, in the display method provided in this embodiment of this application, the color temperature and the luminance of the display can be adjusted based on the luminance of the ambient light and the color temperature of the ambient light, so that after the color temperature and the luminance are adjusted, the display is more friendly to eyes of a user. This reduces vision damage caused by long-time use of the electronic display by the user.

For example, the color temperature and the luminance of the display can be adjusted based on the luminance of the ambient light and the color temperature of the ambient light, so that appearance of content displayed on the display is consistent with the appearance of a printed paper under a same environment. It can be understood that, that the appearance of the content displayed on the display is closer to the appearance of the paper indicates that reading comfort is better and that it is less likely to cause eye fatigue. Therefore, the color temperature and the luminance of the display are adjusted, so that the appearance of the content displayed on the display is consistent with the appearance of the printed paper under the same environment. This can reduce the vision damage caused by the long-time use of the electronic display by the user.

Optionally, the luminance range corresponding to the luminance of the ambient light is greater than or equal to a first luminance threshold and less than or equal to a second luminance threshold. That is, the first luminance threshold≤the luminance range corresponding to the luminance of the ambient light≤the second luminance threshold.

Optionally, the color temperature range corresponding to the color temperature of the ambient light is greater than or equal to a first color temperature threshold and less than or equal to a second color temperature threshold. That is, the first color temperature threshold≤the luminance range corresponding to the luminance of the ambient light≤the second color temperature threshold.

It should be noted that, in the display method provided in this embodiment of this application, based on the luminance of the ambient light and the color temperature of the ambient light, the luminance of the display can be adjusted to a value between the first luminance threshold and the second luminance threshold, and the color temperature of the display can be adjusted to a value between the first color temperature threshold and the second color temperature threshold, so that after the color temperature and the luminance are adjusted, the display can be more friendly to the eyes of the user. This reduces the vision damage caused by the long-time use of the electronic display by the user.

In a possible implementation, the first luminance threshold may change with the luminance of the ambient light.

Optionally, the first luminance threshold may satisfy: the first luminance threshold=0.25*the luminance of the ambient light, where * is a multiplication sign.

For example, when the luminance of the ambient light is 300 lux (lux), the first luminance threshold corresponding to the luminance of the ambient light is 0.25*300=75 nits (nits).

Optionally, the first luminance threshold may satisfy: the first luminance threshold=0.3*the luminance of the ambient light.

Optionally, the first luminance threshold may satisfy: the first luminance threshold=0.2*the luminance of the ambient light.

Optionally, the first luminance threshold may satisfy: the first luminance threshold=0.25*the luminance of the ambient light+100.

Optionally, the first luminance threshold may satisfy: the first luminance threshold=0.25*the luminance of the ambient light+50.

Certainly, the first luminance threshold may alternatively satisfy another relationship. This is not limited in this embodiment of this application.

In another possible implementation, the first luminance threshold is a fixed value.

Optionally, the first luminance threshold may be 75.

Optionally, the first luminance threshold may be 80.

Optionally, the first luminance threshold may be 85.

Certainly, the first luminance threshold may alternatively be another value. This is not limited in this embodiment of this application.

In a possible implementation, the second luminance threshold may change with the luminance of the ambient light.

Optionally, the second luminance threshold may satisfy: the second luminance threshold=0.35*the luminance of the ambient light+100, where * is a multiplication sign, and + is a plus sign.

For example, when the luminance of the ambient light is 300 lux, the second luminance threshold corresponding to the luminance of the ambient light is 0.35*300+100=205 nits.

Optionally, the second luminance threshold may satisfy: the second luminance threshold=0.35*the luminance of the ambient light.

Optionally, the second luminance threshold may satisfy: the second luminance threshold=0.3*the luminance of the ambient light.

Optionally, the second luminance threshold may satisfy: the second luminance threshold=0.35*the luminance of the ambient light+50.

Optionally, the second luminance threshold may satisfy: the second luminance threshold=0.35*the luminance of the ambient light+150.

Certainly, the second luminance threshold may alternatively satisfy another relationship. This is not limited in this embodiment of this application.

In another possible implementation, the second luminance threshold may be a fixed value.

Optionally, the second luminance threshold may be 115.

Optionally, the second luminance threshold may be 110.

Optionally, the second luminance threshold may be 105.

Certainly, the second luminance threshold may alternatively be another value. This is not limited in this embodiment of this application.

It should be noted that, in the display method provided in this embodiment of this application, the luminance of the display can be adjusted to the value between the first luminance threshold and the second luminance threshold based on the luminance of the ambient light, and the luminance of the display can be adjusted to the value between the first luminance threshold and the second luminance threshold, so that the luminance of the display can be close to luminance of the printed paper under same ambient light. It can be understood that, that the appearance of the content displayed on the display is closer to the appearance of the paper indicates that reading comfort is better and that it is less likely to cause eye fatigue. Therefore, the luminance of the display is adjusted to be consistent with the appearance of the printed paper under the same environment, to reduce the vision damage caused by the long-time use of the electronic display by the user.

A specific method for adjusting the display luminance of the display based on the display information of the ambient light may be any method figured out by a person skilled in the art.

For example, when the display luminance of the display is less than the first luminance threshold, the display luminance of the display may be modulated to the first luminance threshold; and when the display luminance of the display is greater than the second luminance threshold, the display luminance of the display may be modulated to the second luminance threshold.

For another example, modulation for the luminance of the display may be determined based on a relational expression that represents the display luminance and the luminance of the ambient light.

A line corresponding to the relational expression that represents the display luminance and the luminance of the ambient light is located between a first luminance line corresponding to a relational expression of the first luminance threshold and the luminance of the ambient light and a second luminance line corresponding to a relational expression of the second luminance threshold and the luminance of the ambient light.

For example, the line corresponding to the relational expression that represents the display luminance and the luminance of the ambient light may be a straight line between the first luminance line corresponding to the relational expression of the luminance of the ambient light and the second luminance line corresponding to the relational expression of the second luminance threshold and the luminance of the ambient light.

For another example, the line corresponding to the relational expression that represents the display luminance and the luminance of the ambient light may be a curve between the first luminance line corresponding to the relational expression of the luminance of the ambient light and the second luminance line corresponding to the relational expression of the second luminance threshold and the luminance of the ambient light.

For another example, the line corresponding to the relational expression that represents the display luminance and the luminance of the ambient light may be a broken line between the first luminance line corresponding to the relational expression of the luminance of the ambient light and the second luminance line corresponding to the relational expression of the second luminance threshold and the luminance of the ambient light.

In a possible implementation, the first color temperature threshold may change with the color temperature of the ambient light.

Optionally, the first color temperature threshold may satisfy: the first color temperature threshold=the color temperature of the ambient light-180, where - is a minus sign.

For example, when the color temperature of the ambient light is 4000 Kelvin temperature (Kelvin, K), the first color temperature threshold corresponding to the color temperature of the ambient light is 4000-180=3820 K.

Optionally, the first color temperature threshold may satisfy: the first color temperature threshold=1.1*the color temperature of the ambient light-180.

Optionally, the first color temperature threshold may satisfy: the first color temperature threshold=1.2*the color temperature of the ambient light-180.

Optionally, the first color temperature threshold may satisfy: the first color temperature threshold=the color temperature of the ambient light-200.

Optionally, the first color temperature threshold may satisfy: the first color temperature threshold=the color temperature of the ambient light-220.

Certainly, the first color temperature threshold may alternatively satisfy another relationship. This is not limited in this embodiment of this application.

In another possible implementation, the first color temperature threshold may alternatively be a fixed value, and does not change with the color temperature of the ambient light.

Optionally, the first color temperature threshold may be 3800.

Optionally, the first color temperature threshold may be 3850.

Optionally, the first color temperature threshold may be 3750.

Certainly, the first color temperature threshold may alternatively be another value. This is not limited in this embodiment of this application.

In a possible implementation, the second color temperature threshold may change with the color temperature of the ambient light.

Optionally, the second color temperature threshold may satisfy: the second color temperature threshold=1.2*the color temperature of the ambient light+200, where * is a multiplication sign, and + is a plus sign.

For example, when the color temperature of the ambient light is 4000 K, the second color temperature threshold corresponding to the color temperature of the ambient light is 1.2*4000 K+200=5000 K.

Optionally, the second color temperature threshold may satisfy: the second color temperature threshold=1.25*the color temperature of the ambient light+200.

Optionally, the second color temperature threshold may satisfy: the second color temperature threshold=1.15*the color temperature of the ambient light+200.

Optionally, the second color temperature threshold may satisfy: the second color temperature threshold=1.2*the color temperature of the ambient light+150.

Optionally, the second color temperature threshold may satisfy: the second color temperature threshold=1.2*the color temperature of the ambient light+100.

Certainly, the second color temperature threshold may alternatively satisfy another relationship. This is not limited in this embodiment of this application.

In another possible implementation, the second color temperature threshold may be a fixed value, and does not change with the color temperature of ambient light.

Optionally, the second color temperature threshold may be 4300.

Optionally, the second color temperature threshold may be 4200.

Optionally, the second color temperature threshold may be 4400.

Certainly, the second color temperature threshold may alternatively be another value. This is not limited in this embodiment of this application.

It should be noted that, in the display method provided in this embodiment of this application, the color temperature of the display can be adjusted to the value between the first color temperature threshold and the second color temperature threshold based on the color temperature of the ambient light and the color temperature of the ambient light, and the color temperature of the display can be adjusted to the value between the first color temperature threshold and the second color temperature threshold, so that the color temperature of the display can be close to a color temperature of the printed paper under the same ambient light. It can be understood that, that the appearance of the content displayed on the display is closer to the appearance of the paper indicates that reading comfort is better and that it is less likely to cause eye fatigue. Therefore, the color temperature of the display is adjusted to be consistent with the appearance of the printed paper under the same environment, to reduce the vision damage caused by the long-time use of the electronic display by the user.

Any method figured out of by a person skilled in the art may be used to adjust the display color temperature of the display based on the display information of the ambient light.

For example, when the display color temperature of the display is lower than the first color temperature threshold, the display color temperature of the display may be modulated to the first color temperature threshold; and when the display color temperature of the display is higher than the second color temperature threshold, the display color temperature of the display may be modulated to the second color temperature threshold.

For another example, modulation for the color temperature of the display may be determined based on a relational expression that represents the display color temperature and the color temperature of the ambient light.

A line corresponding to the relational expression that represents the display color temperature and the color temperature of the ambient light is located between a first color temperature line corresponding to a relational expression of the first color temperature threshold and the color temperature of the ambient light and a second color temperature line corresponding to a relational expression of the second color temperature threshold and the color temperature of the ambient light.

For example, the line corresponding to the relational expression that represents the display color temperature and the color temperature of the ambient light may be a straight line between the first color temperature line corresponding to the relational expression of the color temperature of the ambient light and the second color temperature line corresponding to the relational expression of the second color temperature threshold and the color temperature of the ambient light.

For another example, the line corresponding to the relational expression that represents the display color temperature and the color temperature of the ambient light may be a curve between the first color temperature line corresponding to the relational expression of the color temperature of the ambient light and the second color temperature line corresponding to the relational expression of the second color temperature threshold and the color temperature of the ambient light.

For another example, the line corresponding to the relational expression that represents the display color temperature and the color temperature of the ambient light may be a broken line between the first color temperature line corresponding to the relational expression of the color temperature of the ambient light and the second color temperature line corresponding to the relational expression of the second color temperature threshold and the color temperature of the ambient light.

In a possible implementation, the method may further include: performing color gamut mapping on a to-be-displayed image based on a target three-dimensional mapping table, where the target three-dimensional mapping table includes a plurality of colors and mapped colors corresponding to the plurality of colors.

It should be noted that color gamut mapping may be performed on the to-be-displayed image based on the target three-dimensional mapping table, to change a color of each pixel in the to-be-displayed image, so that after color gamut mapping, a color of the to-be-displayed image is more friendly to the eyes of the user. This further reduces the vision damage caused by the long-time use of the electronic display by the user.

For example, color gamut mapping may be performed on the to-be-displayed image of the display based on the target three-dimensional mapping table, so that the color of each pixel of the to-be-displayed image is mapped to a color of the printed paper, and the color of the to-be-displayed image is consistent with the color of the printed paper under the same environment. It can be understood that, that the appearance of the content displayed on the display is closer to the appearance of the paper indicates that reading comfort is better and that it is less likely to cause eye fatigue. Therefore, making the color of the to-be-displayed image consistent with the color of the printed paper under the same environment can further reduce the vision damage caused by the long-time use of the electronic display by the user.

In a possible implementation, a mapped color, in the target three-dimensional mapping table, corresponding to a color of each pixel in the to-be-displayed image is determined. The color of each pixel in the to-be-displayed image is mapped to the mapped color.

For example, a color of a pixel 1 in the to-be-displayed image is represented as $(R1, G1, B1)$ in a red-green-blue (red-green-blue, RGB) color mode. A mapped color, in the target three-dimensional mapping table, corresponding to $(R1, G1, B1)$ is represented as $(R2, G2, B2)$ in the RGB color mode. Therefore, after color gamut mapping, the pixel 1 in the to-be-displayed image changes from $(R1, G1, B1)$ to $(R2, G2, B2)$.

In a possible implementation, the target three-dimensional mapping table includes a first color and a first mapped color corresponding to the first color. Under the same ambient light, a color difference between the first color displayed on the display and the first mapped color displayed on a paper color card is less than or equal to a color difference threshold, where the paper color card includes at least one of a Pantone printing color card, an uncoated color card, or a coated color card.

For example, the target three-dimensional mapping table includes the first color (color 1) and the first mapped color (color 2) corresponding to the first color. Under the same ambient light, LAB data corresponding to RGB data of the color 1 displayed on the display is $(L1, A1, B1)$, and LAB data corresponding to RGB data of the color 2 displayed on the paper color card is $(L2, A2, B3)$. In this case, the color difference between the first color (color 1) displayed on the display and the first mapped color (color 2) displayed on the paper color card is less than or equal to the color difference threshold.

The color difference between the color 1 on the display and the color 1 on the paper color card may be determined                              to                              be

$$\Delta E = \sqrt{(L1 - L1)^2 + (A1 - A2)^2 + (B1 - B2)^2}$$

based on (L1, A1, B1) and (L2, A2, B3).

It should be noted that under the same ambient light, the color difference between the first color displayed on the display and the first mapped color displayed on the paper color card is less than or equal to the color difference threshold. This indicates that under the same ambient light, the color difference between the first color displayed on the display and the first mapped color displayed on the paper color card is small. Color gamut mapping may be performed on the to-be-displayed image based on the target three-dimensional mapping table, to change the color of each pixel in the to-be-displayed image, so that after the color gamut mapping, a color of the to-be-displayed image displayed on the display is consistent with the appearance of printed paper under the same environment. This can reduce the vision damage caused by the long-time use of the electronic display by the user.

Optionally, the color difference threshold is 13.

Optionally, the color difference threshold may alternatively be 3.

Certainly, the color difference threshold may alternatively be another value. This is not limited in this embodiment of this application.

Optionally, the paper color card may also include a color card printed on an offset paper by using a four-color printer and/or a color card printed on a coated paper by using a four-color printer.

In a possible implementation, the method may further include: obtaining the target three-dimensional mapping table, where the target three-dimensional mapping table includes the plurality of colors and the mapped colors corresponding to the plurality of colors.

It can be learned that, in the display method provided in this embodiment of this application, the target three-dimensional mapping table including the plurality of colors and the mapped colors corresponding to the plurality of colors may be obtained, and then color gamut mapping is performed on the to-be-displayed image based on the target three-dimensional mapping table, so that the color of the to-be-displayed image is more friendly to the eyes of the user. This reduces the vision damage caused by the long-time use of the electronic display by the user.

In a possible implementation, at least one group of color gamuts may be obtained, and each group of color gamuts includes a color gamut of the display and a color gamut of the paper color card under the same ambient light. Then, the target three-dimensional mapping table is determined based on the at least one group of color gamuts.

It should be noted that, compared with the electronic display, the paper color card has better reading comfort. Therefore, the target three-dimensional mapping table including mapping relationships between each color of the paper color card and each color of the display is generated based on the color gamut of the display and the color gamut of the paper color card under the same ambient light, and color gamut mapping is performed on the to-be-displayed image based on the three-dimensional mapping table, so that the color of the to-be-displayed image is more friendly to the eyes of the user. This reduces the vision damage caused by the long-time use of the electronic display by the user.

It should be noted that a specific method for determining the target three-dimensional mapping table based on the at least one group of color gamuts may be any one or more manners figured out by a person skilled in the art.

For example, a hue-preserving minimum (hue-preserving minimum, HPMin) ΔE algorithm may be used to determine the target three-dimensional mapping table based on the at least one group of color gamuts.

It should be noted that the color gamut includes color data (such as RGB data) of a plurality of colors.

The display may display the plurality of colors, to obtain a color gamut boundary of the display and then obtain the color gamut of the display based on the color gamut boundary of the display.

The paper color card may display a plurality of colors, to obtain a color gamut boundary of the paper color card and then obtain the color gamut of the paper color card based on the color gamut boundary of the paper color card.

According to a second aspect, an embodiment of this application provides a display apparatus, used in an electronic device. The electronic device includes a display. The display apparatus includes a transceiver unit and a processing unit. The transceiver unit is configured to obtain environment information of ambient light, where the environment information includes luminance of the ambient light and a color temperature of the ambient light. The processing unit is configured to: determine display information of the ambient light based on the environment information, and adjust display luminance and a display color temperature of the display based on the display information, where the display information includes a luminance range corresponding to the luminance of the ambient light and a color temperature range corresponding to the color temperature of the ambient light.

Optionally, the luminance range corresponding to the luminance of the ambient light is greater than or equal to a first luminance threshold and less than or equal to a second luminance threshold.

Optionally, the color temperature range corresponding to the color temperature of the ambient light is greater than or equal to a first color temperature threshold and less than or equal to a second color temperature threshold.

Optionally, the first luminance threshold satisfies: the first luminance threshold=0.25*the luminance of the ambient light, where * is a multiplication sign.

Optionally, the first luminance threshold is 75.

Optionally, the second luminance threshold satisfies: the second luminance threshold=0.35*the luminance of the ambient light+100, where * is a multiplication sign, and + is a plus sign.

Optionally, the second luminance is 115.

Optionally, the first color temperature threshold satisfies: the first color temperature threshold=the color temperature of the ambient light-180, where - is a minus sign.

Optionally, the first color temperature threshold is 3800.

Optionally, the second color temperature threshold satisfies: the second color temperature threshold=1.2*the color temperature of the ambient light+200, where * is a multiplication sign, and + is a plus sign.

Optionally, the second color temperature threshold is 4300.

In a possible implementation, the processing unit is further configured to perform color gamut mapping on a to-be-displayed image of the display based on a target three-dimensional mapping table, where the target three-dimensional mapping table includes a plurality of colors and mapped colors corresponding to the plurality of colors.

In a possible implementation, the processing unit is specifically configured to: determine a mapped color, in the target three-dimensional mapping table, corresponding to a color of each pixel in the to-be-displayed image; and map the color of each pixel in the to-be-displayed image to the mapped color.

In a possible implementation, the target three-dimensional mapping table includes a first color and a first mapped color corresponding to the first color. Under the same ambient light, a color difference between the first color displayed on the display and the first mapped color displayed on a paper color card is less than or equal to a color difference threshold, where the paper color card includes at least one of a Pantone printing color card, an uncoated color card, or a coated color card.

Optionally, the color difference threshold is 13.

In a possible implementation, the transceiver unit is further configured to obtain the target three-dimensional mapping table, where the target three-dimensional mapping table includes the plurality of colors and the mapped colors corresponding to the plurality of colors.

In a possible implementation, the transceiver unit is specifically configured to: obtain at least one group of color gamuts, where each group of color gamuts includes a color gamut of the display and a color gamut of the paper color card under the same ambient light; and determine the target three-dimensional mapping table based on the at least one group of color gamuts.

Optionally, the paper color card includes a color card printed on an offset paper by using a four-color printer and/or a color card printed on a coated paper by using a four-color printer.

According to a third aspect, an embodiment of this application further provides a display apparatus. The display apparatus includes at least one processor. When the at least one processor executes program code or instructions, the method in any one of the first aspect or the possible implementations of the first aspect is implemented.

Optionally, the display apparatus may further include at least one memory, and the at least one memory is configured to store the program code or the instructions.

According to a fourth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method in any one of the first aspect or the possible implementations of the first aspect.

Optionally, the chip may be an integrated circuit.

According to a fifth aspect, an embodiment of this application further provides a computer-readable storage medium, configured to store a computer program. The computer program is configured to implement the method in any one of the first aspect or the possible implementations of the first aspect.

According to a sixth aspect, an embodiment of this application further provides a computer program product including instructions. When the computer program product is run on a computer, the computer is enabled to implement the method in any one of the first aspect or the possible implementations of the first aspect.

The display apparatus, the computer storage medium, the computer program product, and the chip provided in this embodiment are all configured to perform the method provided above. Therefore, for beneficial effect that can be achieved by the display apparatus, the computer storage medium, the computer program product, and the chip, refer to the beneficial effect in the method provided above. Details are not described herein again.

## BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other accompanying drawings from these accompanying drawings without creative efforts.

FIG. 1 is a diagram of a structure of an electronic device according to an embodiment of this application;
FIG. 2 is a diagram of a structure of a display according to an embodiment of this application;

FIG. 3 is a schematic flowchart of a display method according to an embodiment of this application;

FIG. 4 is a diagram of a relationship between luminance of ambient light and luminance of a display according to an embodiment of this application;

FIG. 5 is a diagram of a relationship between a color temperature of ambient light and a color temperature of a display according to an embodiment of this application;

FIG. 6 is a diagram of a structure of a display apparatus according to an embodiment of this application; and

FIG. 7 is a diagram of a structure of a chip according to an embodiment of this application.

## DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and indicates that three relationships may exist. For example, A and/or B may indicate the following three cases: Only A exists, both A and B exist, and only B exists.

In this specification and accompanying drawings of embodiments of this application, the terms "first", "second", and the like are intended to distinguish between different objects or distinguish between different processing of a same object, but are not intended to indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

It should be noted that, in descriptions of embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise specified, "a plurality of" means two or more. First, terms used in embodiments of this application are explained and described.

Paper-like display: Hardware or software parameters of a display are changed, so that an optical parameter of the display is similar to a feature of a paper book.

Anti-glare: "Glare" is a bad illumination phenomenon. When luminance of a light source is extremely high or a luminance difference between a background and a center of a field of view is large, "glare" occurs. A "glare" phenomenon not only affects viewing, but also affects vision health. Anti-glare effectively reduces this effect. The display can be seen clearly even in the sun.

Three-dimensional mapping: a method of mapping from three-dimensional space, that is, mapping from three dimensions: R, G, and B.

Color mode (LAB) color space: color-opponent space, with a dimension L indicating luminance and a and b indicating color opponent dimensions, based on non-linearly compression CIE XYZ color space coordinates.

Cyan, magenta, yellow, black (cyan magenta yellow black, CMYK): A four-color printing mode is a color set mode used in color printing. A three-primary color mixing principle of pigments is used, black ink is added, and a total of four colors are mixed and added to form a so-called "full-color printing".

As an information transmission medium, electronic displays appear in every aspect of people's life. With improvement of people's living standards, people spend more time on using the electronic displays on average.

However, long-time use of an electronic display by a user causes damage to eyes of the user.

Therefore, an embodiment of this application provides a display method, to reduce vision damage caused by the long-time use of the electronic display by the user. The method is applicable to an electronic device. The electronic device may be a mobile phone, a tablet computer, a wearable device, a smart television, a smart screen, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA).

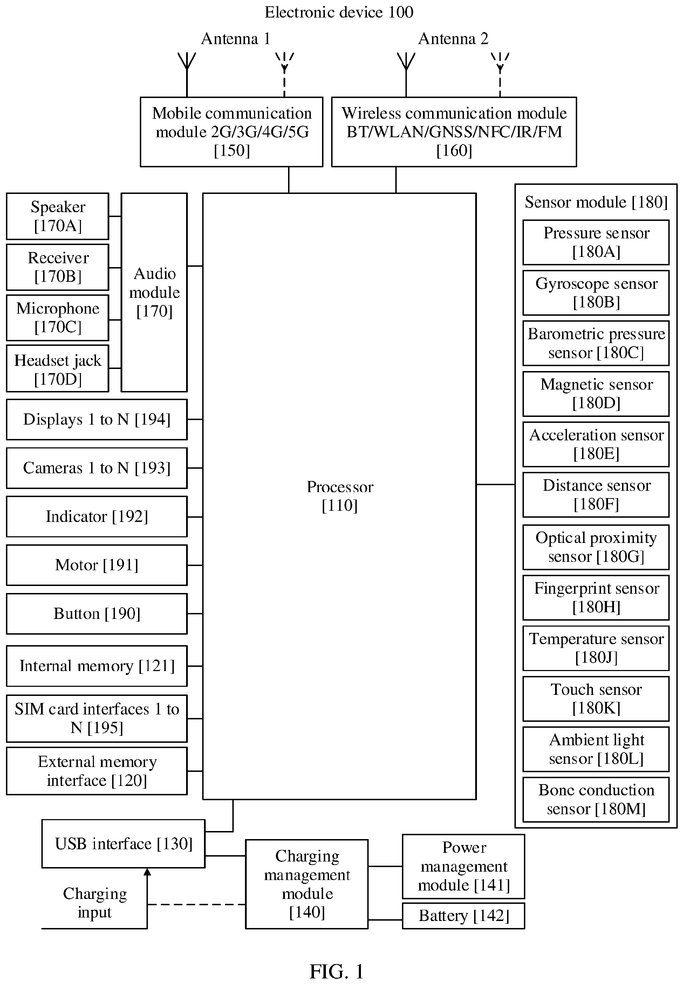

FIG. 1 shows a possible existence form of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus. The processor 110 may be coupled to the touch sensor 180K through the I2C interface, so that the processor 110 communicates with the touch sensor 180K through the I2C bus interface, to implement a touch function of the electronic device 100. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

It can be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

The electronic device 100 implements a display function by using the GPU, the display 194, the application processor, and the like. The GPU is a microprocessor for image processing, and is connected to the display 194 and the application processor. The GPU is configured to perform mathematical and geometrical calculation, and is configured to perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement the photographing function by using the camera 193, the ISP, the touch sensor, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. It should be understood that, in descriptions of this embodiment of this application, an image in an RGB format is used as an example for description, and an image format is not limited in this embodiment of this application. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the electronic device 100. The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area.

The electronic device 100 may implement an audio function such as music playing and recording by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. The indicator 192 may be an indicator light, and may be configured to indicate a charging status and a power change, or may be configured to indicate a message, a missed call, a notification, and the like. The SIM card interface 195 is configured to connect to a SIM card.

It should be noted that the electronic device 100 may be a chip system or a device having a structure similar to that in FIG. 1. The chip system may include a chip, or may include a chip and another discrete device. For actions, terms, and the like in embodiments of this application, refer to each other. This is not limited. In embodiments of this application, names of messages exchanged between devices, names of parameters in the messages, or the like are merely examples. Other names may alternatively be used during specific implementation. This is not limited. In addition, a composition structure shown in FIG. 1 does not constitute a limitation on the electronic device 100. In addition to the components shown in FIG. 1, the electronic device 100 may include more or fewer components than those shown in FIG. 1, or some components may be combined, or different component arrangements may be used.

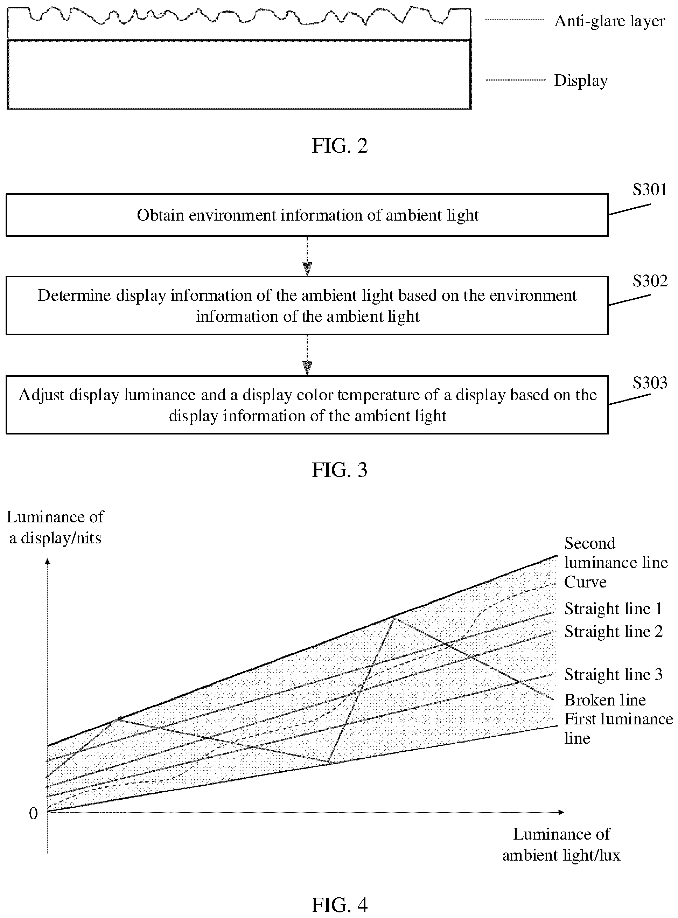

As shown in FIG. 2, in a possible implementation, an anti-glare layer is further disposed on the display of the electronic device. The anti-glare layer can prevent interference from reflection and glare.

The following describes a display method provided in an embodiment of this application with reference to the electronic device shown in FIG. 1.

FIG. 3 shows a display method according to an embodiment of this application. The method may be performed by the foregoing electronic device. As shown in FIG. 3, the method includes the following steps.

S301: The electronic device obtains environment information of ambient light.

The environment information includes luminance of the ambient light and a color temperature of the ambient light.

For example, the electronic device may determine, by using an ambient light sensor, that the luminance of the ambient light is 300 lux, and the color temperature of the ambient light is 4000 K.

S302: The electronic device determines display information of the ambient light based on the environment information of the ambient light.

The display information of the ambient light includes a luminance range corresponding to the luminance of the ambient light and a color temperature range corresponding to the color temperature of the ambient light.

Optionally, the luminance range corresponding to the luminance of the ambient light is greater than or equal to a first luminance threshold and less than or equal to a second luminance threshold. That is, the first luminance threshold≤the luminance range corresponding to the luminance of the ambient light≤the second luminance threshold.

Optionally, the color temperature range corresponding to the color temperature of the ambient light is greater than or equal to a first color temperature threshold and less than or equal to a second color temperature threshold. That is, the first color temperature threshold≤the luminance range corresponding to the luminance of the ambient light≤the second color temperature threshold.

It should be noted that, in the display method provided in this embodiment of this application, based on the luminance of the ambient light and the color temperature of the ambient light, luminance of a display can be adjusted to a value between the first luminance threshold and the second luminance threshold, and a color temperature of the display can be adjusted to a value between the first color temperature threshold and the second color temperature threshold, so that after the color temperature and the luminance are adjusted, the display can be more friendly to eyes of a user. This reduces vision damage caused by long-time use of the electronic display by the user.

In a possible implementation, the first luminance threshold may change with the luminance of the ambient light.

Optionally, the first luminance threshold may satisfy: the first luminance threshold=0.25*the luminance of the ambient light, where * is a multiplication sign.

For example, when the luminance of the ambient light is 300 lux, the first luminance threshold corresponding to the luminance of the ambient light is 0.25*300=75 nits.

Optionally, the first luminance threshold may satisfy: the first luminance threshold=0.3*the luminance of the ambient light.

Optionally, the first luminance threshold may satisfy: the first luminance threshold=0.2*the luminance of the ambient light.

Optionally, the first luminance threshold may satisfy: the first luminance threshold=0.25*the luminance of the ambient light+100.

Optionally, the first luminance threshold may satisfy: the first luminance threshold=0.25*the luminance of the ambient light+50.

Certainly, the first luminance threshold may alternatively satisfy another relationship. This is not limited in this embodiment of this application.

In another possible implementation, the first luminance threshold is a fixed value.

Optionally, the first luminance threshold may be 75.

Optionally, the first luminance threshold may be 80.

Optionally, the first luminance threshold may be 85.

Certainly, the first luminance threshold may alternatively be another value. This is not limited in this embodiment of this application.

In a possible implementation, the second luminance threshold may change with the luminance of the ambient light.

Optionally, the second luminance threshold may satisfy: the second luminance threshold=0.35*the luminance of the ambient light+100, where * is a multiplication sign, and + is a plus sign.

For example, when the luminance of the ambient light is 300 lux, the second luminance threshold corresponding to the luminance of the ambient light is 0.35*300+100=205 nits.

Optionally, the second luminance threshold may satisfy: the second luminance threshold=0.35*the luminance of the ambient light.

Optionally, the second luminance threshold may satisfy: the second luminance threshold=0.3*the luminance of the ambient light.

Optionally, the second luminance threshold may satisfy: the second luminance threshold=0.35*the luminance of the ambient light+50.

Optionally, the second luminance threshold may satisfy: the second luminance threshold=0.35*the luminance of the ambient light+150.

Certainly, the second luminance threshold may alternatively satisfy another relationship. This is not limited in this embodiment of this application.

In another possible implementation, the second luminance threshold may be a fixed value.

Optionally, the second luminance threshold may be 115.

Optionally, the second luminance threshold may be 110.

Optionally, the second luminance threshold may be 105.

Certainly, the second luminance threshold may alternatively be another value. This is not limited in this embodiment of this application.

It should be noted that, in the display method provided in this embodiment of this application, the luminance of the display can be adjusted to the value between the first luminance threshold and the second luminance threshold based on the luminance of the ambient light, and the luminance of the display can be adjusted to the value between the first luminance threshold and the second luminance threshold, so that the luminance of the display can be close to luminance of a printed paper under same ambient light. It can be understood that, that appearance of content displayed on the display is closer to appearance of a paper indicates that reading comfort is better and that it is less likely to cause eye fatigue. Therefore, the luminance of the display is adjusted to be consistent with the appearance of the printed paper under a same environment, to reduce the vision damage caused by the long-time use of the electronic display by the user.

In a possible implementation, the first color temperature threshold may change with the color temperature of the ambient light.

Optionally, the first color temperature threshold may satisfy: the first color temperature threshold=the color temperature of the ambient light-180, where - is a minus sign.

For example, when the color temperature of the ambient light is 4000 K, the first color temperature threshold corresponding to the color temperature of the ambient light is 4000-180=3820 K.

Optionally, the first color temperature threshold may satisfy: the first color temperature threshold=1.1*the color temperature of the ambient light-180.

Optionally, the first color temperature threshold may satisfy: the first color temperature threshold=1.2*the color temperature of the ambient light-180.

Optionally, the first color temperature threshold may satisfy: the first color temperature threshold=the color temperature of the ambient light-200.

Optionally, the first color temperature threshold may satisfy: the first color temperature threshold=the color temperature of the ambient light-220.

Certainly, the first color temperature threshold may alternatively satisfy another relationship. This is not limited in this embodiment of this application.

In another possible implementation, the first color temperature threshold may alternatively be a fixed value, and does not change with the color temperature of the ambient light.

Optionally, the first color temperature threshold may be 3800.

Optionally, the first color temperature threshold may be 3850.

Optionally, the first color temperature threshold may be 3750.

Certainly, the first color temperature threshold may alternatively be another value. This is not limited in this embodiment of this application.

In a possible implementation, the second color temperature threshold may change with the color temperature of the ambient light.

Optionally, the second color temperature threshold may satisfy: the second color temperature threshold=1.2*the color temperature of the ambient light+200, where * is a multiplication sign, and + is a plus sign.

For example, when the color temperature of the ambient light is 4000 K, the second color temperature threshold corresponding to the color temperature of the ambient light is 1.2*4000 K+200=5000 K.

Optionally, the second color temperature threshold may satisfy: the second color temperature threshold=1.25*the color temperature of the ambient light+200.

Optionally, the second color temperature threshold may satisfy: the second color temperature threshold=1.15*the color temperature of the ambient light+200.

Optionally, the second color temperature threshold may satisfy: the second color temperature threshold=1.2*the color temperature of the ambient light+150.

Optionally, the second color temperature threshold may satisfy: the second color temperature threshold=1.2*the color temperature of the ambient light+100.

Certainly, the second color temperature threshold may alternatively satisfy another relationship. This is not limited in this embodiment of this application.

In another possible implementation, the second color temperature threshold may be a fixed value, and does not change with the color temperature of ambient light.

Optionally, the second color temperature threshold may be 4300.

Optionally, the second color temperature threshold may be 4200.

Optionally, the second color temperature threshold may be 4400.

Certainly, the second color temperature threshold may alternatively be another value. This is not limited in this embodiment of this application.

It should be noted that, in the display method provided in this embodiment of this application, the color temperature of the display can be adjusted to the value between the first color temperature threshold and the second color temperature threshold based on the color temperature of the ambient light and the color temperature of the ambient light, and the color temperature of the display can be adjusted to the value between the first color temperature threshold and the second color temperature threshold, so that the color temperature of the display can be close to a color temperature of the printed paper under the same ambient light. It can be understood that, that the appearance of the content displayed on the display is closer to the appearance of the paper indicates that reading comfort is better and that it is less likely to cause eye fatigue. Therefore, the color temperature of the display is adjusted to be consistent with the appearance of the printed paper under the same environment, to reduce the vision damage caused by the long-time use of the electronic display by the user.

S303: The electronic device adjusts display luminance and a display color temperature of the display based on the display information of the ambient light.

A specific method for adjusting the display luminance of the display based on the display information of the ambient light may be any method figured out by a person skilled in the art.

For example, when the display luminance of the display is less than the first luminance threshold, the display luminance of the display may be modulated to the first luminance threshold; and when the display luminance of the display is greater than the second luminance threshold, the display luminance of the display may be modulated to the second luminance threshold.

For example, the luminance of the ambient light is 300 lux, the first luminance threshold corresponding to the luminance of the ambient light is 75 nits, and the first luminance threshold corresponding to the luminance of the ambient light is 205 nits. If current display luminance of the display is 60 nits, and the current display luminance of the display is less than the first luminance threshold 75 nits, the luminance of the display is adjusted to 75 nits.

For another example, the luminance of the ambient light is 300 lux, the first luminance threshold corresponding to the luminance of the ambient light is 75 nits, and the first luminance threshold corresponding to the luminance of the ambient light is 205 nits. If current display luminance of the display is 225 nits, and the current display luminance of the display is higher than the second luminance threshold 205 nits, the luminance of the display is adjusted to 205 nits.

For another example, modulation for the luminance of the display may be determined based on a relational expression that represents the display luminance and the luminance of the ambient light.

A line corresponding to the relational expression that represents the display luminance and the luminance of the ambient light is located between a first luminance line corresponding to a relational expression of the first luminance threshold and the luminance of the ambient light and a second luminance line corresponding to a relational expression of the second luminance threshold and the luminance of the ambient light.

For example, as shown in FIG. 4, the line corresponding to the relational expression that represents the display luminance and the luminance of the ambient light may be a straight line 1 between the first luminance line corresponding to the relational expression of the luminance of the ambient light and the second luminance line corresponding to the relational expression of the second luminance threshold and the luminance of the ambient light.

For another example, as shown in FIG. 4, the line corresponding to the relational expression that represents the display luminance and the luminance of the ambient light may be a straight line 2 between the first luminance line corresponding to the relational expression of the luminance of the ambient light and the second luminance line corresponding to the relational expression of the second luminance threshold and the luminance of the ambient light.

For another example, as shown in FIG. 4, the line corresponding to the relational expression that represents the display luminance and the luminance of the ambient light may be a straight line 3 between the first luminance line corresponding to the relational expression of the luminance of the ambient light and the second luminance line corresponding to the relational expression of the second luminance threshold and the luminance of the ambient light.

For another example, as shown in FIG. 4, the line corresponding to the relational expression that represents the display luminance and the luminance of the ambient light may be a curve between the first luminance line corresponding to the relational expression of the luminance of the ambient light and the second luminance line corresponding to the relational expression of the second luminance threshold and the luminance of the ambient light.

For another example, as shown in FIG. 4, the line corresponding to the relational expression that represents the display luminance and the luminance of the ambient light may be a broken line between the first luminance line corresponding to the relational expression of the luminance of the ambient light and the second luminance line corresponding to the relational expression of the second luminance threshold and the luminance of the ambient light.

A specific method for adjusting the display color temperature of the display based on the display information of the ambient light may be any method figured out by a person skilled in the art.

For example, when the display color temperature of the display is lower than the first color temperature threshold, the display color temperature of the display may be modulated to the first color temperature threshold; and when the display color temperature of the display is higher than the second color temperature threshold, the display color temperature of the display may be modulated to the second color temperature threshold.

For example, the color temperature of the ambient light is 4000 K, the first color temperature threshold corresponding to the color temperature of the ambient light is 3820 K, and the first color temperature threshold corresponding to the color temperature of the ambient light is 5000 K. If current display color temperature of the display is 3500 K, and the current display color temperature of the display is lower than the first color temperature threshold 3820 K, the color temperature of the display is adjusted to 3820 K.

For another example, the color temperature of the ambient light is 4000 K, the first color temperature threshold corresponding to the color temperature of the ambient light is 3820 K, and the first color temperature threshold corresponding to the color temperature of the ambient light is 5000 K. If current display color temperature of the display is 5500 K, and the current display color temperature of the display is higher than the second color temperature threshold 5000 K, the color temperature of the display is adjusted to 5000 K.

For another example, modulation for the color temperature of the display may be determined based on a relational expression that represents the display color temperature and the color temperature of the ambient light.

A line corresponding to the relational expression that represents the display color temperature and the color temperature of the ambient light is located between a first color temperature line corresponding to a relational expression of the first color temperature threshold and the color temperature of the ambient light and a second color temperature line corresponding to a relational expression of the second color temperature threshold and the color temperature of the ambient light.

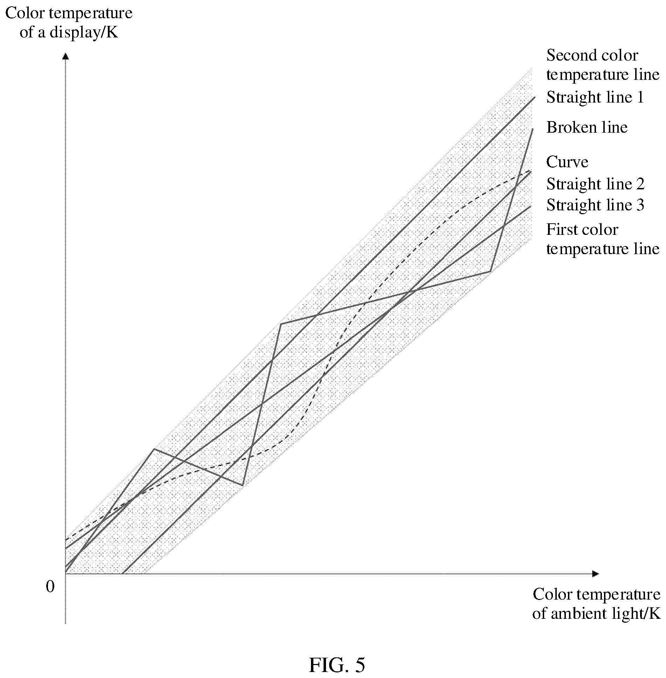

For example, as shown in FIG. 5, the line corresponding to the relational expression that represents the display color temperature and the color temperature of the ambient light may be a straight line 1 between the first color temperature line corresponding to the relational expression of the color temperature of the ambient light and the second color temperature line corresponding to the relational expression of the second color temperature threshold and the color temperature of the ambient light.

For example, as shown in FIG. 5, the line corresponding to the relational expression that represents the display color temperature and the color temperature of the ambient light may be a straight line 2 between the first color temperature line corresponding to the relational expression of the color temperature of the ambient light and the second color temperature line corresponding to the relational expression of the second color temperature threshold and the color temperature of the ambient light.

For example, as shown in FIG. 5, the line corresponding to the relational expression that represents the display color temperature and the color temperature of the ambient light may be a straight line 3 between the first color temperature line corresponding to the relational expression of the color temperature of the ambient light and the second color temperature line corresponding to the relational expression of the second color temperature threshold and the color temperature of the ambient light.

For another example, as shown in FIG. 5, the line corresponding to the relational expression that represents the display color temperature and the color temperature of the ambient light may be a curve between the first color temperature line corresponding to the relational expression of the color temperature of the ambient light and the second color temperature line corresponding to the relational expression of the second color temperature threshold and the color temperature of the ambient light.

For another example, as shown in FIG. 5, the line corresponding to the relational expression that represents the display color temperature and the color temperature of the ambient light may be a broken line between the first color temperature line corresponding to the relational expression of the color temperature of the ambient light and the second color temperature line corresponding to the relational expression of the second color temperature threshold and the color temperature of the ambient light.

It can be learned that, in the display method provided in this embodiment of this application, the color temperature and the luminance of the display can be adjusted based on the luminance of the ambient light and the color temperature of the ambient light, so that after the color temperature and the luminance are adjusted, the display is more friendly to the eyes of the user. This reduces the vision damage caused by the long-time use of the electronic display by the user.

For example, the color temperature and the luminance of the display can be adjusted based on the luminance of the ambient light and the color temperature of the ambient light, so that the appearance of the content displayed on the display is consistent with the appearance of the printed paper under the same environment. It can be understood that, that the appearance of the content displayed on the display is closer to the appearance of the paper indicates that reading comfort is better and that it is less likely to cause eye fatigue. Therefore, the color temperature and the luminance of the display are adjusted, so that the appearance of the content displayed on the display is consistent with the appearance of the printed paper under the same environment. This can reduce the vision damage caused by the long-time use of the electronic display by the user.

In a possible implementation, the method may further include the following step.

S304: The electronic device performs color gamut mapping on a to-be-displayed image of the display based on a target three-dimensional mapping table.

The target three-dimensional mapping table includes a plurality of colors and mapped colors corresponding to the plurality of colors.

The to-be-displayed image may be a to-be-displayed image that includes a text, a pure picture, or an image that includes a text and a picture.

It should be noted that color gamut mapping may be performed on the to-be-displayed image based on the target three-dimensional mapping table, to change a color of each pixel in the to-be-displayed image, so that after color gamut mapping, a color of the to-be-displayed image is more friendly to the eyes of the user. This further reduces the vision damage caused by the long-time use of the electronic display by the user.

For example, color gamut mapping may be performed on the to-be-displayed image based on the target three-dimensional mapping table, so that the color of each pixel of the to-be-displayed image is mapped to a color of the printed paper, and the color of the to-be-displayed image is consistent with the color of the printed paper under the same environment. It can be understood that, that the appearance of the content displayed on the display is closer to the appearance of the paper indicates that reading comfort is better and that it is less likely to cause eye fatigue. Therefore, making the color of the to-be-displayed image consistent with the color of the printed paper under the same environment can further reduce the vision damage caused by the long-time use of the electronic display by the user.

In a possible implementation, a mapped color, in the target three-dimensional mapping table, corresponding to the color of each pixel in the to-be-displayed image may be first determined. Then, the color of each pixel in the to-be-displayed image is mapped to the mapped color.

For example, a color of a pixel 1 in the to-be-displayed image is represented as (R1, G1, B1) in an RGB color mode. A mapped color, in the target three-dimensional mapping table, corresponding to (R1, G1, B1) is represented as (R2, G2, B2) in the RGB color mode. Therefore, after color gamut mapping, the pixel 1 in the to-be-displayed image changes from (R1, G1, B1) to (R2, G2, B2).

It can be learned that, in the display method provided in this embodiment of this application, the target three-dimensional mapping table including the plurality of colors and the mapped colors corresponding to the plurality of colors may be obtained, and then color gamut mapping is performed on the to-be-displayed image based on the target three-dimensional mapping table, so that the color of the to-be-displayed image is more friendly to the eyes of the user. This reduces the vision damage caused by the long-time use of the electronic display by the user.

In a possible implementation, the target three-dimensional mapping table includes a first color and a first mapped color corresponding to the first color. Under the same ambient light, a color difference between the first color displayed on the display and the first mapped color displayed on a paper color card is less than or equal to a color difference threshold, where the paper color card includes at least one of a Pantone printing color card, an uncoated color card, or a coated color card.

For example, the target three-dimensional mapping table includes the first color (color 1) and the first mapped color (color 2) corresponding to the first color. Under the same ambient light, LAB data corresponding to RGB data of the color 1 displayed on the display is (L1, A1, B1), and LAB data corresponding to RGB data of the color 2 displayed on the paper color card is (L2, A2, B3). In this case, the color difference between the first color (color 1) displayed on the display and the first mapped color (color 2) displayed on the paper color card is less than or equal to the color difference threshold.

The color difference between the color 1 on the display and the color 1 on the paper color card may be determined to be

$$\Delta E = \sqrt{(L1 - L1)^2 + (A1 - A2)^2 + (B1 - B2)^2}$$

based on (L1, A1, B1) and (L2, A2, B3).

It should be noted that under the same ambient light, the color difference between the first color displayed on the display and the first mapped color displayed on the paper color card is less than or equal to the color difference threshold. This indicates that under the same ambient light, the color difference between the first color displayed on the display and the first mapped color displayed on the paper color card is small. Color gamut mapping may be performed on the to-be-displayed image based on the target three-dimensional mapping table, to change the color of each pixel in the to-be-displayed image, so that after the color gamut mapping, the color of the to-be-displayed image displayed on the display is consistent with the appearance of printed paper under the same environment. This can reduce the vision damage caused by the long-time use of the electronic display by the user.

Optionally, the color difference threshold is 13.

Optionally, the color difference threshold may alternatively be 3.

Certainly, the color difference threshold may alternatively be another value. This is not limited in this embodiment of this application.

Optionally, the paper color card may also include a color card printed on an offset paper by using a four-color printer and/or a color card printed on a coated paper by using a four-color printer.

S305: The electronic device obtains the target three-dimensional mapping table.

In a possible implementation, at least one group of color gamuts may be first obtained. Then, the target three-dimensional mapping table is determined based on the at least one group of color gamuts. Each group of color gamuts includes a color gamut of the display and a color gamut of a paper color card under the same ambient light.

Optionally, the paper color card includes at least one of the Pantone printing color card, the uncoated color card, or the coated color card.

It should be noted that, compared with the electronic display, the paper color card has better reading comfort. Therefore, the target three-dimensional mapping table including mapping relationships between each color of the paper color card and each color of the display is generated based on the color gamut of the display and the color gamut of the paper color card under the same ambient light, and color gamut mapping is performed on the to-be-displayed image based on the three-dimensional mapping table, so that the color of the to-be-displayed image is more friendly to the eyes of the user. This reduces the vision damage caused by the long-time use of the electronic display by the user.

It should be noted that a specific method for determining the target three-dimensional mapping table based on the at least one group of color gamuts may be any one or more manners figured out by a person skilled in the art.

For example, a hue-preserving minimum (hue-preserving minimum, HPMin) ΔE algorithm may be used to determine the target three-dimensional mapping table based on the at least one group of color gamuts.

It should be noted that the color gamut includes color data (such as RGB data) of a plurality of colors.

In a possible implementation, the electronic device may perform the foregoing display method only in an e-book display mode.

It should be noted that the electronic device determines the display information based on the environment information, and may adjust a background color displayed on the electronic device. The electronic device performs color gamut mapping on the to-be-displayed image based on the target three-dimensional mapping table, and may adjust a foreground color displayed on the electronic device. White displayed on the electronic device is a background color, and a color other than white displayed on the electronic device is a foreground color.

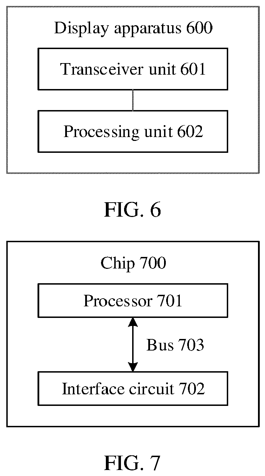

The following describes, with reference to FIG. 6, a display apparatus configured to perform the foregoing display method.

It may be understood that, to implement the foregoing function, the display apparatus includes corresponding hardware and/or software modules for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that this implementation goes beyond the scope of embodiments of this application.

In embodiments of this application, the display apparatus may be divided into functional modules based on the foregoing method examples. For example, functional modules may be obtained through division based on corresponding functions, or two or more functions may be integrated into one processing module. The integrated module may be implemented in a form of hardware. It should be noted that module division in this embodiment is an example and is merely logical function division. In actual implementation, there may be another division manner.

When each functional module is obtained through division based on each corresponding function, FIG. 6 is a diagram of a possible composition of the display apparatus in the foregoing embodiment. As shown in FIG. 6, the display apparatus 600 may include a transceiver unit 601 and a processing unit 602.

The transceiver unit 601 is configured to obtain environment information of ambient light, where the environment information includes luminance of the ambient light and a color temperature of the ambient light.

The processing unit 602 is configured to: determine display information of the ambient light based on the environment information, and adjust display luminance and a display color temperature of the display based on the display information, where the display information includes a luminance range corresponding to the luminance of the ambient light and a color temperature range corresponding to the color temperature of the ambient light.

Optionally, the luminance range corresponding to the luminance of the ambient light is greater than or equal to a first luminance threshold and less than or equal to a second luminance threshold.

Optionally, the color temperature range corresponding to the color temperature of the ambient light is greater than or equal to a first color temperature threshold and less than or equal to a second color temperature threshold.

Optionally, the first luminance threshold satisfies: the first luminance threshold=0.25*the luminance of the ambient light, where * is a multiplication sign.

Optionally, the first luminance threshold is 75.

Optionally, the second luminance threshold satisfies: the second luminance threshold=0.35*the luminance of the ambient light+100, where * is a multiplication sign, and + is a plus sign.

Optionally, the second luminance is 115.

Optionally, the first color temperature threshold satisfies: the first color temperature threshold=the color temperature of the ambient light-180, where - is a minus sign.

Optionally, the first color temperature threshold is 3800.

Optionally, the second color temperature threshold satisfies: the second color temperature threshold=1.2*the color temperature of the ambient light+200, where * is a multiplication sign, and + is a plus sign.

Optionally, the second color temperature threshold is 4300.

In a possible implementation, the processing unit 602 is further configured to perform color gamut mapping on a to-be-displayed image based on a target three-dimensional mapping table, where the target three-dimensional mapping table includes a plurality of colors and mapped colors corresponding to the plurality of colors.

In a possible implementation, the processing unit 602 is specifically configured to: determine a mapped color, in the target three-dimensional mapping table, corresponding to a color of each pixel in the to-be-displayed image; and map the color of each pixel in the to-be-displayed image to the mapped color.

In a possible implementation, the target three-dimensional mapping table includes a first color and a first mapped color corresponding to the first color. Under the same ambient light, a color difference between the first color displayed on the display and the first mapped color displayed on a paper color card is less than or equal to a color difference threshold, where the paper color card includes at least one of a Pantone printing color card, an uncoated color card, or a coated color card.

Optionally, the color difference threshold is 13.

In a possible implementation, the transceiver unit 601 is further configured to obtain the target three-dimensional mapping table, where the target three-dimensional mapping table includes the plurality of colors and the mapped colors corresponding to the plurality of colors.

In a possible implementation, the transceiver unit 601 is specifically configured to: obtain at least one group of color gamuts, where each group of color gamuts includes a color gamut of the display and a color gamut of the paper color card under the same ambient light; and determine the target three-dimensional mapping table based on the at least one group of color gamuts.

Optionally, the paper color card includes a color card printed on an offset paper by using a four-color printer and/or a color card printed on a coated paper by using a four-color printer.

An embodiment of this application further provides a chip. FIG. 7 is a diagram of a structure of a chip 700. The chip 700 includes one or more processors 701 and an interface circuit 702. Optionally, the chip 700 may further include a bus 703.

The processor 701 may be an integrated circuit chip and has a signal processing capability. In an implementation process, the steps in the foregoing packet processing method may be completed by using a hardware integrated logic circuit in the processor 701, or by using instructions in a form of software.

Optionally, the processor 701 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 701 may implement or perform the methods and steps that are disclosed embodiments of this application. The general-purpose processor may be a microprocessor, or the processor may be any conventional processor or the like.

The interface circuit 702 may be configured to send or receive data, instructions, or information. The processor 701 may process the data, the instructions, or other information received through the interface circuit 702, and send, through the interface circuit 702, information obtained through processing.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions stored in the memory (the operation instructions may be stored in an operating system).

Optionally, the chip may be used in the display apparatus in embodiments of this application. Optionally, the interface circuit 702 may be configured to output an execution result of the processor 701. For the packet processing method provided in one or more embodiments of this application, refer to the foregoing embodiments. Details are not described herein again.

It should be noted that functions corresponding to each of the processor 701 and the interface circuit 702 may be implemented by using a hardware design, or may be implemented by using a software design, or may be implemented by using a combination of software and hardware. This is not limited herein.

An embodiment of this application further provides a display apparatus. The apparatus includes at least one processor. When the at least one processor executes program code or instructions, the foregoing related method steps are implemented to implement the packet processing method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a display apparatus, the display apparatus is enabled to perform the foregoing related method steps to implement the packet processing method in the foregoing embodiments.

An embodiment of this application further provides a computer program product. When the computer program product is run on a computer, the computer is enabled to perform the foregoing related steps to implement the packet processing method in the foregoing embodiments.

An embodiment of this application further provides a display apparatus. This apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the packet processing method in the foregoing method embodiments.

It should be understood that, in various embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that example units and algorithm steps described with reference to embodiments disclosed in this specification may be implemented by electronic hardware or a combination of computer software and electronic hardware. Whether these functions are performed by hardware or software depends on particular applications and design constraints of technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in an electrical form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a current technology, or some of the technical solutions may be implemented in a form of a software product. This computer software product is stored in a storage medium and includes several instructions for instructing a computer device (which may be a personal computer, a server, or a network device) to perform all or some of the steps of the method described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A display method, applied to an electronic device, wherein the electronic device comprises a display, and the method comprises:

   obtaining environment information of ambient light, wherein the environment information comprises luminance of the ambient light and a color temperature of the ambient light;
   determining display information of the ambient light based on the environment information, wherein the display information comprises a luminance range corresponding to the luminance of the ambient light and a color temperature range corresponding to the color temperature of the ambient light; and
   adjusting display luminance and a display color temperature of the display based on the display information.

2. The method according to claim 1, wherein the luminance range corresponding to the luminance of the ambient light is greater than or equal to a first luminance threshold and less than or equal to a second luminance threshold.

3. The method according to claim 1 or 2, wherein the color temperature range corresponding to the color temperature of the ambient light is greater than or equal to a first color temperature threshold and less than or equal to a second color temperature threshold.

4. The method according to any one of claims 1 to 3, wherein the first luminance threshold satisfies:
the first luminance threshold=0.25*the luminance of the ambient light, wherein * is a multiplication sign.

5. The method according to any one of claims 1 to 3, wherein the first luminance threshold is 75.

6. The method according to any one of claims 1 to 5, wherein the second luminance threshold satisfies:
the second luminance threshold=0.35*the luminance of the ambient light+ 100, wherein * is a multiplication sign, and + is a plus sign.

7. The method according to any one of claims 1 to 5, wherein second luminance is 115.

8. The method according to any one of claims 1 to 7, wherein the first color temperature threshold satisfies:
the first color temperature threshold=the color temperature of the ambient light-180, wherein - is a minus sign.

9. The method according to any one of claims 1 to 7, wherein the first color temperature threshold is 3800.

10. The method according to any one of claims 1 to 9, wherein the second color temperature threshold satisfies:
the second color temperature threshold=1.2*the color temperature of the ambient light+200, wherein * is a multiplication sign, and + is a plus sign.

11. The method according to any one of claims 1 to 9, wherein the second color temperature threshold is 4300.

12. The method according to any one of claims 1 to 10, wherein the method further comprises:
performing color gamut mapping on a to-be-displayed image of the display based on a target three-dimensional mapping table, wherein the target three-dimensional mapping table comprises a plurality of colors and mapped colors corresponding to the plurality of colors.

13. The method according to claim 12, wherein the performing color gamut mapping on a to-be-displayed image of the display based on a target three-dimensional mapping table comprises:

    determining a mapped color, in the target three-dimensional mapping table, corresponding to a color of each pixel in the to-be-displayed image; and

mapping the color of each pixel in the to-be-displayed image to the mapped color.

14. The method according to claim 12 or 13, wherein the target three-dimensional mapping table comprises a first color and a first mapped color corresponding to the first color, and under same ambient light, a color difference between the first color displayed on the display and the first mapped color displayed on a paper color card is less than or equal to a color difference threshold, wherein the paper color card comprises at least one of a Pantone printing color card, an uncoated color card, or a coated color card.

15. The method according to claim 14, wherein the color difference threshold is 13.

16. The method according to any one of claims 1 to 15, wherein the method further comprises:
obtaining the target three-dimensional mapping table, wherein the target three-dimensional mapping table comprises the plurality of colors and the mapped colors corresponding to the plurality of colors.

17. The method according to claim 16, wherein the obtaining the target three-dimensional mapping table comprises:

    obtaining at least one group of color gamuts, wherein each group of color gamuts comprises a color gamut of the display and a color gamut of the paper color card under same ambient light, and the paper color card comprises at least one of the Pantone printing color card, the uncoated color card, or the coated color card; and
    determining the target three-dimensional mapping table based on the at least one group of color gamuts.

18. A display apparatus, used in an electronic device, wherein the electronic device comprises a display, and the apparatus comprises a transceiver unit and a processing unit;

    the transceiver unit is configured to obtain environment information of ambient light, wherein the environment information comprises luminance of the ambient light and a color temperature of the ambient light; and
    the processing unit determines display information of the ambient light based on the environment information, and adjusts display luminance and a display color temperature of the display based on the display information, wherein the display information comprises a luminance range corresponding to the luminance of the ambient light and a color temperature range corresponding to the color temperature of the ambient light.

19. The apparatus according to claim 18, wherein the luminance range corresponding to the luminance of the ambient light is greater than or equal to a first luminance threshold and less than or equal to a second luminance threshold.

20. The apparatus according to claim 18 or 19, wherein the color temperature range corresponding to the color temperature of the ambient light is greater than or equal to a first color temperature threshold and less than or equal to a second color temperature threshold.

21. The apparatus according to any one of claims 18 to 20, wherein the first luminance threshold satisfies: the first luminance threshold=0.25*the luminance of the ambient light, wherein * is a multiplication sign.

22. The apparatus according to any one of claims 18 to 20, wherein the first luminance threshold is 75.

23. The apparatus according to any one of claims 18 to 22, wherein the second luminance threshold satisfies: the second luminance threshold=0.35*the luminance of the ambient light+ 100, wherein * is a multiplication sign, and + is a plus sign.

24. The apparatus according to any one of claims 18 to 22, wherein second luminance is 115.

25. The apparatus according to any one of claims 18 to 24, wherein the first color temperature threshold satisfies: the first color temperature threshold=the color temperature of the ambient light-180, wherein - is a minus sign.

26. The apparatus according to any one of claims 18 to 24, wherein the first color temperature threshold is 3800.

27. The apparatus according to any one of claims 18 to 26, wherein the second color temperature threshold satisfies: the second color temperature threshold=1.2*the color temperature of the ambient light+200, wherein * is a multiplication sign, and + is a plus sign.

28. The apparatus according to any one of claims 18 to 26, wherein the second color temperature threshold is 4300.

29. The apparatus according to any one of claims 18 to 28, wherein the processing unit is further configured to:
perform color gamut mapping on a to-be-displayed image of the display based on a target three-dimensional mapping table, wherein the target three-dimensional mapping table comprises a plurality of colors and mapped colors corresponding to the plurality of colors.

30. The apparatus according to claim 29, wherein the processing unit is specifically configured to:

determine a mapped color, in the target three-dimensional mapping table, corresponding to a color of each pixel in the to-be-displayed image; and
map the color of each pixel in the to-be-displayed image to the mapped color.

31. The apparatus according to claim 28 or 29, wherein the target three-dimensional mapping table comprises a first color and a first mapped color corresponding to the first color, and under same ambient light, a color difference between the first color displayed on the display and the first mapped color displayed on a paper color card is less than or equal to a color difference threshold, wherein the paper color card comprises at least one of a Pantone printing color card, an uncoated color card, or a coated color card.

32. The apparatus according to claim 31, wherein the color difference threshold is 13.

33. The apparatus according to any one of claims 18 to 32, wherein the transceiver unit is further configured to:
obtain the target three-dimensional mapping table, wherein the target three-dimensional mapping table comprises the plurality of colors and the mapped colors corresponding to the plurality of colors.

34. The apparatus according to claim 33, wherein the transceiver unit is specifically configured to:

obtain at least one group of color gamuts, wherein each group of color gamuts comprises a color gamut of the display and a color gamut of the paper color card under same ambient light, and the paper color card comprises at least one of the Pantone printing color card, the uncoated color card, or the coated color card; and
determine the target three-dimensional mapping table based on the at least one group of color gamuts.

35. A display apparatus, comprising at least one processor and a memory, wherein the at least one processor executes a program or instructions stored in the memory, to enable the display apparatus to implement the method according to any one of claims 1 to 17.

36. A computer-readable storage medium, configured to store a computer program, wherein when the computer program is run on a computer or a processor, the computer or the processor is enabled to implement the method according to any one of claims 1 to 17.

37. A computer program product, wherein the computer program product comprises instructions, and when the instructions are run on a computer or a processor, the computer or the processor is enabled to implement the method according to any one of claims 1 to 17.

Electronic device 100

Antenna 1     Antenna 2

| Mobile communication module 2G/3G/4G/5G [150] | Wireless communication module BT/WLAN/GNSS/NFC/IR/FM [160] |

Sensor module [180]

| Speaker [170A] | | | Pressure sensor [180A] |
| Receiver [170B] | Audio module [170] | | Gyroscope sensor [180B] |
| Microphone [170C] | | Processor [110] | Barometric pressure sensor [180C] |
| Headset jack [170D] | | | Magnetic sensor [180D] |
| Displays 1 to N [194] | | | Acceleration sensor [180E] |
| Cameras 1 to N [193] | | | Distance sensor [180F] |
| Indicator [192] | | | Optical proximity sensor [180G] |
| Motor [191] | | | Fingerprint sensor [180H] |
| Button [190] | | | Temperature sensor [180J] |
| Internal memory [121] | | | Touch sensor [180K] |
| SIM card interfaces 1 to N [195] | | | Ambient light sensor [180L] |
| External memory interface [120] | | | Bone conduction sensor [180M] |

| USB interface [130] | | Charging management module [140] | Power management module [141] |
| Charging input | | | Battery [142] |

FIG. 1

Anti-glare layer

Display

FIG. 2

| Obtain environment information of ambient light | S301 |

| Determine display information of the ambient light based on the environment information of the ambient light | S302 |

| Adjust display luminance and a display color temperature of a display based on the display information of the ambient light | S303 |

FIG. 3

Luminance of
a display/nits

Second
luminance line
Curve
Straight line 1
Straight line 2

Straight line 3
Broken line
First luminance
line

Luminance of
ambient light/lux

FIG. 4

FIG. 5

Display apparatus 600

Transceiver unit 601

Processing unit 602

FIG. 6

Chip 700

Processor 701

Bus 703

Interface circuit 702

FIG. 7

## INTERNATIONAL SEARCH REPORT

| International application No. |
| --- |
| **PCT/CN2023/104505** |

| A. | CLASSIFICATION OF SUBJECT MATTER |
| --- | --- |

G09G3/20(2006.01)i

According to International Patent Classification (IPC) or to both national classification and IPC

| B. | FIELDS SEARCHED |
| --- | --- |

Minimum documentation searched (classification system followed by classification symbols)

IPC: G09G H04N H05B

Documentation searched other than minimum documentation to the extent that such documents are included in the fields searched

Electronic data base consulted during the international search (name of data base and, where practicable, search terms used)

CNTXT; ENTXT; ENTXTC; VEN: 显示, 屏, 环境, 光, 亮度, 色温, 阈值, 范围, 映射, 色域, display, screen, environment, light, brightness, color temperature, threshold, range, mapping, color gamut

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 105955585 A (VIVO COMMUNICATION TECHNOLOGY CO., LTD.) 21 September 2016 (2016-09-21) description, paragraphs 30-202, and figures 1-12 | 1-37 |
| X | CN 104978946 A (SHENZHEN TCL NEW TECHNOLOGY CO., LTD.) 14 October 2015 (2015-10-14) description, paragraphs 65-153, and figures 1-5 | 1-3, 18-20, 35-37 |
| X | CN 113391778 A (GUANGDONG XIAOTIANCAI TECHNOLOGY CO., LTD.) 14 September 2021 (2021-09-14) description, paragraphs 40-81, and figures 1-4 | 1, 18, 35-37 |
| X | CN 108182923 A (BOE TECHNOLOGY GROUP CO., LTD.) 19 June 2018 (2018-06-19) description, paragraphs 30-51, and figures 1-6 | 1, 18, 35-37 |
| X | IN 201647028509 A (LIU et al.) 18 August 2017 (2017-08-18) claims | 1, 18, 35-37 |
| A | CN 104812127 A (XIAOMI INC.) 29 July 2015 (2015-07-29) entire document | 1-37 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 October 2023** | **12 October 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104505**

| Patent document cited in search report | | | Publication date (day/month/year) | Patent family member(s) | | | Publication date (day/month/year) |
|---|---|---|---|---|---|---|---|
| CN | 105955585 | A | 21 September 2016 | None | | | |
| CN | 104978946 | A | 14 October 2015 | None | | | |
| CN | 113391778 | A | 14 September 2021 | None | | | |
| CN | 108182923 | A | 19 June 2018 | US | 2019205081 | A1 | 04 July 2019 |
| IN | 201647028509 | A | 18 August 2017 | None | | | |
| CN | 104812127 | A | 29 July 2015 | KR | 20160132967 | A | 21 November 2016 |
| | | | | EP | 3277057 | A1 | 31 January 2018 |
| | | | | EP | 3277057 | A4 | 17 October 2018 |
| | | | | EP | 3277057 | B1 | 26 February 2020 |
| | | | | MX | 2017005356 | A | 21 June 2017 |
| | | | | MX | 369961 | B | 27 November 2019 |
| | | | | WO | 2016150164 | A1 | 29 September 2016 |
| | | | | JP | 2017515257 | A | 08 June 2017 |
| | | | | JP | 6273026 | B2 | 31 January 2018 |
| | | | | BR | 112016021242 | A2 | 15 August 2017 |
| | | | | RU | 2016149322 | A | 18 June 2018 |
| | | | | RU | 2016149322 | A3 | 06 September 2018 |
| | | | | US | 2017105262 | A1 | 13 April 2017 |
| | | | | US | 9913340 | B2 | 06 March 2018 |

Form PCT/ISA/210 (patent family annex) (July 2022)

**EP 4 571 725 A1**

REFERENCES CITED IN THE DESCRIPTION

**Patent documents cited in the description**

- CN 202211064296